# EUROPÄISCHE PATENTSCHRIFT

(11) **EP 2 284 973 B1**
(45) Veröffentlichungstag und Bekanntmachung des Hinweises auf die Patenterteilung: **25.04.2012**
(21) Anmeldenummer: 09167379.8
(22) Anmeldetag: 06.08.2009
(51) Int. Cl.: H02J 1/10, H02M 7/42

(54) **Rückstromsensor für parallel geschaltete Solarmodule**
Reverse current sensor for solar modules connected in parallel
Capteur de flux de retour pour de modules solaire branché en parallèle

(43) Veröffentlichungstag der Anmeldung: 16.02.2011
(73) Patentinhaber: SMA Solar Technology AG, 34266 Niestetal (DE)
(72) Erfinder: Hackenberg, Gerd, 34121 Kassel (DE)
(74) Vertreter: Hüppe, Paul Wilhelm

(56) Entgegenhaltungen:
- EP-A- 1 387 462
- EP-A- 1 986 306
- WO-A-2007/048421
- WO-A-2009/073867
- DE-A1- 10 247 776
- US-A1- 2007 107 767

## Beschreibung

### TECHNISCHES GEBIET DER ERFINDUNG

Die Erfindung bezieht sich auf eine Vorrichtung zur Einspeisung elektrischer Energie von einer Mehrzahl von Strings, die jewells mehrere In Reihe geschaltete Photovoltaikmodule aufweisen, in ein Stromnetz mit den Merkmalen das Oberbegriffs des unabhängigen Patentanspruchs 1 sowie auf eine Photovoltalkanlage mit einer solchen Vorrichtung. Dabei stellt die Vorrichtung die Einheiten bereit, die neben den Strings und deren Verkabelung zur Einspeisung von elektrischer Energie von den Strings in ein Stromnetz benötigt werden. Derartige Vorrichtungen werden häufig von anderen Fachfirmen geliefert als die Strings und deren Verkabelung für eine Photovoltaikanlage.

Der Fachbegriff String beruht auf der Tatsache, dass üblicherweise mehrere Photovoltaikmodule In Reihe geschaltet werden, um die Ausgangsspannung eines Photovoltaikgenerators gegenüber der Elementarspannung eines Photovoltaikmoduls zu erhöhen. In der vorliegenden Beschreibung wird der Begriff String auch tatsächlich vornehmlich für eine reine Reihenschaltung von Photovoltaikmodulen verwendet. Soweit dies jedoch nicht explizit susgeschlossen ist, kann ein String auch eine Parallelschaltung von Photovoltaikmodulen aufweisen, selbst wenn diss im Rahmen der vorliegenden Erfindung nicht bevorzugt Ist.

Das Strommetz in das mit einer erfindungsgemäßen Vorrichtung bzw. In das von einer erfindungsgemäßen Photovoltaikanlage eingespelst wird, Ist übilcherwelse ein ein- oder dreiphasiges Wechselatromnetz. Es kann sich dabei um ein öffentliches Wechselstromnetz handeln.

### STAND DER TECHNIK

Bei einer üblichen Photovoltaikanlage wird eine Vielzahl von Strings aus Photovoltaikmodulen parallel geschaltet, um die gewünschte elektrische Leistung bei einer begrenzten Spannung zu erreichen. Dabei sind die einzelnen Strings gegen das Auftreten von Rückströmen zu schützen, d. h. von Strömen, die eine im Vergleich zu den im ordnungsgemäßen Betrieb von den Photovoltaikmodulen des jeweiligen Strings generierten Strömen umgekehrte Flussrichtung aufweisen. Prinzipiell kann ein Rückstrom nur dann auftreten, wenn die offene Klemmenspannung oder Leerlaufspannung der parallel geschalteten Strings unterschiedlich ist. Normalerweise wird dies bei gleich langen, d. h. aus einer gleichen Anzahl von Solarmodulen aufgebauten Strings, die den Regelfall darstellen, vermieden. Selbst bei Abschattung der Solarmodule eines einzelnen Strings tritt kein nennenswerter Rückstrom durch diesen String auf, da die Abschattung keinen nennenswerten Einfluss auf die Klemmenspannung hat. Das Auftreten von Rückströmen setzt vielmehr das Vorhandensein eines Fehlers, z. B. infolge des Kurzschlusses eines oder mehrerer Solarmodule eines Strings voraus, durch den die offene Klemmenspannung des Strings deutlich unter die offene Klemmenspannung der dazu parallel geschalteten Strings abfällt. Wegen der inneren Diodenstruktur der Solarmodule kann dann ein Rückstrom durch den fehlerhaften String fließen, der je nach Stromstärke zu einer starken Erwärmung bis zur Zerstörung der Solarmodule dieses Strings führt. Der Kurzschluss eines Photovoltaikmoduls kann durch Kurzschluss einer oder mehrerer Zellen in dem Photovoltaikmodul oder durch einen doppelten Erdschluss eines Photovoltaikmoduls bzw. seiner Verkabelung hervorgerufen werden. Auch wenn diese Fehler sehr unwahrscheinlich sind, d. h. in der Praxis sehr selten auftreten, so müssen trotzdem Vorkehrungen getroffen werden, da sie ein hohes Schadens- und Gefahrenpotential bergen, denn alle Photovoltaikmodule des betroffenen Strings können beschädigt werden, und durch die lokale Erhitzung können zudem Sekundärschäden entstehen. Es gilt daher die Forderung, das Auftreten von Rückströmen durch einzelne der bei einer Photovoltaikanlage parallel geschalteten Strings zu vermeiden.

Zur Vermeidung von Rückströmen ist es bei dem Produkt Sunny String Monitor (http://download.sma.de/smaprosa/dateien/7356/SSM-UDE091221.pdf, Produkt Katalog: Sunny Family 2009/2010 S. 82) bekannt, die einzelnen Strings im Rahmen ihrer Parallelschaltung durch Stringsicherungen abzusichern, die einen defekten String von den anderen parallel geschalteten Strings abtrennen. Bei Auslösung einer Stringsicherung aufgrund eines Fehlers in dem zugehörigen String wird eine Warnung ausgegeben, die den fehlerhaften String identifiziert. Derartige Stringsicherungen sind bei den tendenziell größer werdenden Ausgangsspannungen der einzelnen Strings von mittlerweise bis zu über 1000 Volt aufwändig und entsprechend teuer. Mit der Verwendung üblicher Schmelzsicherungen ist überdies ein permanenter Leistungsverlust verbunden. Dieser tritt auch dann auf, wenn statt Sicherungen Rückstrom sperrende Dioden für die einzelnen Strings vorgesehen werden. Zur laufenden Überwachung der einzelnen Strings im Hinblick auf kleinere Fehler oder Leistungseinbußen, die auf einen schleichenden oder nahenden Ausfall hinweisen, weist das Produkt Sunny String Monitor je String einen Stromsensor auf. Dieser Stromsensor erfasst die Größe des von dem jeweiligen String generierten Stroms. Zur Ausfallüberwachung der parallel geschalteten Strings werden die im Betrieb von allen Strings fließenden Ströme im Kollektiv, d. h. die relativen Größen der von den einzelnen Strings fließenden Ströme ausgewertet.

Das Produkt Sunny String Monitor ist zur Verwendung zusammen mit einem Wechselrichter zur Einspeisung von elektrischer Energie von den Strings in ein Wechselstromnetz vorgesehen, bei dem eine Steuerung eine Wechselrichterbrücke so ansteuert, dass die zwischen Busleitungen, an die die Strings in Parallelschaltung angeschlossen sind, anstehende Systemspannung im Hinblick auf eine maximale elektrische Leistung der Strings einstellt. Diese Vorgehensweise ist als MPP (Maximum Power Point)-Tracking bekannt, wobei die maximale elektrische Leistung der Strings üblicherweise in einem Bereich von grundsätzlich möglichen Systemspannungen, dem sogenannten MPP-Fenster eingestellt wird.

Aus der WO 2007/048421 A2 sind eine Photovoltaikanlage mit den Merkmalen des Oberbegriffs des unabhängigen Patentanspruchs 1 und eine zu deren Aufbau verwendbare Vorrichtung mit den Merkmalen des Oberbegriffs des unabhängigen Patentanspruchs 2 bekannt. Hier ist zusätzlich in einer Anschlussleitung jedes einzelnen Strings ein mechanischer Schalter vorgesehen, der geöffnet wird, um den jeweiligen String im Falle des Auftretens eines Rückstroms von den Busleitungen abzutrennen. Um diesen mechanischen Schalter vor Beschädigungen durch eine sich zwischen seinen Kontakten ausbildende Funkenstrecke zu schützen, ist ein Halbleiterschalter zwischen den Busleitungen vorgesehen, um diese beim Öffnen und auch beim etwaigen Schließen des Schalters vorübergehend kurzzuschließen.

### AUFGABE DER ERFINDUNG

Der Erfindung liegt die Aufgabe zugrunde, eine Vorrichtung mit den Merkmalen des Oberbegriffs des unabhängigen Patentanspruchs 1 und eine Photovoltaikanlage mit einer solchen Vorrichtung aufzuzeigen, die mit minimalem apparativen Aufwand in der Lage sind, die mit dem Auftreten von Rückströmen durch einzelne Strings verbundenen Risiken zu beherrschen.

### LÖSUNG

Die Aufgabe der Erfindung wird durch eine Vorrichtung zur Einspeisung elektrischer Energie von einer Mehrzahl von Strings In ein Stromnetz mit den Merkmalen des unabhängigen Patentanspruchs 1 und durch eine Photovoltalkanlage mit einer solchen Vorrichtung und den Merkmalen des Patentanspruchs 2 gelöst. Bevorzugte Ausführungsformen der neuen Vorrichtung und der neuen Photovoltaikanlage sind in den abhängigen Patentansprüchen definiert.

### BESCHREIBUNG DER ERFINDUNG

Erfindungsgemäß ist für jeden String ein Stromsensor vorgesehen, der zumindest erfasst, ob ein Rückstrom zu dem Strom fließt, und den Rückstrom an die Steuerung meldet. Dabei ist hier mit dem Rückstrom ein signifikanter Strom gemeint, der eine Im Vergleich zu den im ordnungsgemäßen Betrieb von den Photovoltaikmodulen des jeweiligen Strings generierten Strömen umgekehrte Flussrichtung aufweiset und auf einem Fehler in dem jeweiligen String beruht. Als Reaktion auf die Meldung des Rückstrome reduziert die Steuerung die zwischen den Busleitungen anstehende Systemspannung, um den Rückstrom zu stoppen. Die zwischen den Busleitungen anliegende Spannung ist die Spannung, die den Rückstrom hervorruft. Wenn Sie reduziert wird, kann eine Spannung erreicht oder sogar unterschritten werden, die auch der defekte String noch als Klemmenspannung aufweist oder zumindest sperren kann. Damit wird das Weiterfließen des Rückstroms unterbunden, ohne dass hierfür eine Sicherung oder irgendein anderes Schaltelement für den betroffenen String vorhanden sein muss. Nach der Reduzierung der Spannung zwischen den Busleitungen liefern die anderen Strings weiterhin elektrische Energie, die von dem Wandler In das Stromnetz eingespeist wird, solange die reduzierte Spannung zwischen den Busleitungen für eine Einspeisung von elektrischer Energie in das Stromnetz noch ausreichend ist. Insbesondere dann, wenn die Steuerung die zwischen den Busleitungen anstehende Systemspannung nur wenig unter den aktuellen MPP absenken muss, um den Rückstrom zu stoppen, beschränken sich die Verluste an elektrischer Energie, die nicht mehr in das Stromnetz eingespeist werden, im Wesentlichen auf den Beitrag des fehlerhaften Strings, der auch bei einem zu der vorliegenden Erfindung alternativen Abschalten des Strings durch Schaltelemente nicht mehr eingespeist werden könnte. Hinzu kommt ein geringer Verlust, der durch die Fehlanpassung der optimalen Systemspannung (Verlassen des MPP) auftritt.

Wenn die Steuerung die zwischen den Busleitungen anstehende Systemspannung innerhalb des aktuellen MPP-Fensters weiter unter den MPP reduzieren muss, weil sich der Rückstrom sonst nicht stoppen lässt, reduziert sich die in das Stromnetz eingespeiste elektrische Leistung zwar deutlicher unter die von den weiterhin funktionierenden Strings potentiell einspeisbare Maximalleistung. Die damit verbundenen Leistungsverluste sind in vielen Fällen aber nur klein. Insbesondere fallen Sie angesichts der Seltenheit des Auftretens von Rückströmen in der Praxis und des geringen Aufwands zur Realisation der neuen Photovoltaikanlage bzw. der neuen Vorrichtung nicht ins Gewicht, weil hierbei auf jede Sicherung oder jedes Schaltelement für die einzelnen Strings verzichtet werden kann und weil ein Stromsensor im Gegensatz zu einer Sicherung, jedem anderen Schaltelement und einer Rückstrom sperrenden Diode nicht mit signifikanten laufenden Leistungsverlusten verbunden ist.

Wenn die Steuerung die zwischen den Busleitungen anstehende Systemspannung zum Stoppen des Rückstroms unter einen Wert reduzieren müsste, der für die Netzeinspeisung nicht unterschritten werden darf, wird die Systemspannung auf null reduziert und keine Energie mehr in das Netz eingespeist. Hierzu kann die Steuerung die zwischen den Busleitungen anstehende Systemspannung kurzschließen. Dies kann im Fall eines üblichen Wechselrichters mit einer getaktete Schalter aufweisenden Wechselrichterbrücke als Wandler zur Einspeisung in ein Wechselstromnetz so erfolgen, dass der Wechselrichter zunächst durch Öffnen von Schützen, die dem Zuschalten der Photovoltaikanlage zu dem Wechselstromnetz dienen, von dem Wechselstromnetz getrennt wird und eine Pufferkapazität am Eingang des Wechselrichters durch Kurzschließen über einen Entladungswiderstand entladen wird und dass dann die Busleitungen durch Schließen der Schalter der Wechselrichterbrücke direkt miteinander verbunden werden. Zwar ist ein derartiges Kurzschließen der Busleitungen mit dem Ergebnis verbunden, dass keinerlei elektrische Energie von der Photovoltaikanlage mehr in das Stromnetz eingespeist wird. Aber auch die hiermit verbundenen Verluste sind angesichts der Seltenheit ihres Auftretens und der erheblichen apparativen Einsparungen bei der Bereitstellung der neuen Photovoltaikanlage bzw. der neuen Vorrichtung and deren hohen Wirkungsgrad im Normalbetrieb nur gering.

Vorzugsweise sind die Stromsensoren in mehreren dezentral anzuordnenden Anschlusseinheiten vorgesehen, mit denen mehrere Strings im Feld auf ein Paar von Anschlussleitungen parallel geschaltet werden, bevor diese Anschlussleitungen zu einer den Wandler umfassenden Zentraleinheit geführt werden, an der Anschlüsse für die dezentralen Anschlusseinheiten an die Busleitungen vorgesehen sind.

Da die Steuerung des Wandlers in der Zentraleinheit vorliegt, während die Stromsensoren in den Anschlusseinheiten vorgesehen sind, müssen Kommunikationsstrecken zwischen den Anschlusseinheiten und der Zentraleinheit vorgesehen werden. Hierbei kann es sich um Kommunikationsleitungen oder auch um Funk- oder andere drahtlose Signalübertragungsstrecken handeln, mit denen das zusätzliche Verlegen von Kommunikationsleitungen eingespart wird. Auch die Nachrüstung von bestehenden Photovoltaikanlagen im Sinne der vorliegenden Erfindung ist einfacher, wenn die Stromsensoren in den Anschlusseinheiten einen Rückstrom drahtlos an die Steuerung des Wandlers in der Zentraleinheit melden.

Die Stromsensoren, die erfindungsgemäß eingesetzt werden, können von sehr einfachem Aufbau sein, wenn sie nur dazu vorgesehen sind, das Auftreten eines Rückstroms zu melden, der einen vorgegebenen Grenzwert überschreitet. In diesem Fall umfasst das Signal des Rückstromsensors im Minimalfall nur das Vorhandensein des Rückstroms, und die Steuerung des Wandlers muss nicht einmal erkennen, in welchem String der Rückstrom auftritt, obwohl diese zusätzliche Information hilfreich ist, um den ursächlichen Fehler zu beseitigen. Ein derartiger Stromsensor, der nur das Vorhandensein eines Rückstroms oberhalb eines bestimmten Grenzwerts festzustellen braucht, kann sehr einfach realisiert werden, beispielsweise durch einen Kontakt, der infolge eines von dem Rückstrom hervorgerufenen Magnetfelds geschlossen wird. Ganz grundsätzlich hat der erfindungsgemäß eingesetzte Rückstromsensor den Vorteil, dass er im normalen Betrieb der Strings keine Verlustleistung hervorruft, die den Wirkungsgrad der Photovoltaikanlage reduziert. Hiermit unterscheidet er sich wesentlich von Sicherungen oder Dioden für die einzelnen Strings.

Bei der neuen Photovoltaikanlage und der neuen Vorrichtung können die Stromsensoren zusätzlich die Größe der von den Strings in Vorwärtsrichtung fließenden Ströme messen und an eine Überwachungseinrichtung für die Strings übermitteln. Dies kann der an sich bekannten Stringausfallüberwachung entsprechen.

Anders gesagt, können die Stromsensoren einer vorhandenen Stringausfallüberwachung, die die von den Strings fließenden Ströme nach Betrag und Richtung messen und diese Werte an die Steuerung des Wandlers übermitteln, zur Verwirklichung der erfindungsgemäßen Photovoltaikanlage bzw. Vorrichtung genutzt werden. Es kann dann ausreichend sein, die Steuerung des Wandlers durch Einspielen einer modifizierten Steuersoftware erfindungsgemäß zu modifizieren.

Wie bereits angedeutet wurde, ist es bei der neuen Photovoltaikanlage und der neuen Vorrichtung bevorzugt, wenn die Anschlüsse für die einzelnen Strings keine Dioden und/oder Überstromsicherungen aufweisen, wobei die Strings, die jeweils nur in Reihe geschaltete Photovoltaikmodule aufweisen, auch nicht selbst mit derartigen Dioden oder Überstromsicherungen abgesichert sind. Vielmehr wird der hierfür betriebene Aufwand sowohl in apparativer Hinsicht als auch in Bezug auf die permanenten Leistungsverluste bei der vorliegenden Erfindung gezielt eingespart. Die Anschlusseinheiten der neuen Photovoltaikanlage und der neuen Vorrichtung können daher neben den Stromsensoren im Wesentlichen durch Stromsammelschienen ausgebildet werden, die auch konstruktive Funktionen der Anschlusseinheiten übernehmen können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand eines Ausführungsbeispiels unter Bezugnahme auf die beigefügten Zeichnungen näher erläutert und beschrieben.
- **Fig. 1**: zeigt schematisch den Aufbau der neuen Photovoltaikanlage und
- **Fig. 2**: skizziert den Aufbau des zentralen Wandlers der Photovoltaikanlage gemäß Fig. 1.

### FIGURENBESCHREIBUNG

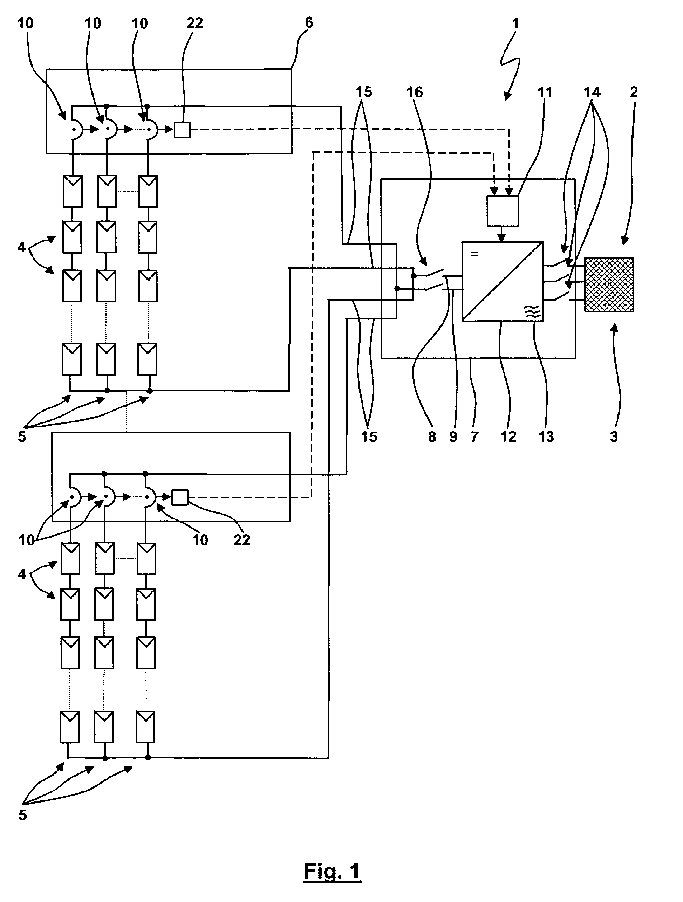

**Fig. 1** skizziert eine Photovoltaikanlage 1 zur Einspeisung elektrischer Energie in ein Stromnetz 2, das hier ein Wechselstromnetz 3 ist. Dabei wird die elektrische Energie durch eine Vielzahl von Photovoltaikmodulen 4 generiert, die jeweils zu Strings 5 in Reihe geschaltet sind. Die Strings 5 sind gruppenweise mit Hilfe von dezentralen Anschlusseinheiten 6 parallel geschaltet, bevor sie in einer Zentraleinheit 7 parallel zueinander an Busleitungen 8 und 9 angeschlossen sind. Dabei ist für jeden String 5 in den Anschlusseinheiten 6 ein Stromsensor 10 vorgesehen, der an eine Steuerung 11 in der Zentraleinheit 7 zumindest meldet, ob ein Rückstrom durch den jeweiligen String 5 auftritt, d. h. ein Strom in Gegenrichtung zu der Richtung, in der ein üblicherweise von den Photovoltaikmodulen 4 generierter Strom fließt. Zur Übertragung der Signale von den Stromsensoren 10 an die Steuerung 11 ist hier in jeder Anschlusseinheit 6 ein Sender 22 vorgesehen, der drahtlos mit der Steuerung 11 kommuniziert. Der Sender 22 kann dabei nicht nur dann ein Signal senden, wenn ein Rückstrom auftritt, sondern auch mitteilen, welcher String 5 hiervon betroffen ist. Darüber hinaus kann er die von allen Strings 5 fließenden Ströme melden, so dass durch Überwachung des Kollektivs dieser Ströme eine Stringausfallüberwachung möglich ist. Ein auftretender signifikanter, d. h. einen Grenzwert überschreitender Rückstrom ist ein Hinweis auf einen Defekt des zugehörigen Strings 5. Er bedeutet nicht nur einen Leistungsverlust, weil dieser Rückstrom von den anderen Strings generiert nicht in das Stromnetz 2 eingespeist wird. Sondern er stellt vor allem ein Gefahrenpotential insbesondere für den betroffenen String 5 dar. Daher greift die Steuerung 11 in der Zentraleinheit 7 in den Betrieb eines Wandlers 12 ein, mit dem die elektrische Energie von den Strings 5 in das Stromnetz eingespeist wird. Der Wandler 12 ist hier als dreiphasiger Wechselrichter 13 angedeutet, der über Schütze 14 an das Stromnetz 2 angeschlossen ist. Eingangsseitig sind Anschlussleitungen 15 von den Anschlusseinheiten 6 an die Busleitungen 8 und 9 angeschlossen, durch die der photovoltaisch generierte Strom dem Wechselrichter 13 über einen allpolig schaltenden Leistungsschalter 16 zufließt. Dabei modifizieren die gemeldeten Rückströme den Betrieb der Steuerung 11, der ohne das Auftreten des Rückstroms darauf ausgelegt ist, die zwischen den Busleitungen 8 und 9 anliegende Eingangsspannung des Wandlers 12 so einzustellen, dass eine maximale elektrische Leistung von den Solarmodulen 4 generiert wird. Um einen auftretenden Rückstrom zu stoppen, reduziert die Steuerung 11 die zwischen den Busleitungen 8 und 9 anstehende Systemspannung, die auch über den einzelnen Strings 5 anliegt. Die Reduktion geht soweit, bis die über dem von dem Rückstrom betroffenen String anliegende Spannung nicht mehr ausreicht, den Rückstrom hervorzurufen. Dies kann im Einzelfall bedeuten, dass die Spannung zwischen den Busleitungen 8 und 9 bis auf null reduziert wird. Solange dies nicht der Fall ist bzw. solange die zwischen den Busleitungen 8 und 9 anstehende Systemspannung noch ausreichend ist, damit der Wandler 12 elektrische Energie in das Stromnetz 2 einspeisen kann, wird von den nicht fehlerhaften Strings weiterhin elektrische Energie in das Stromnetz 2 eingespeist.

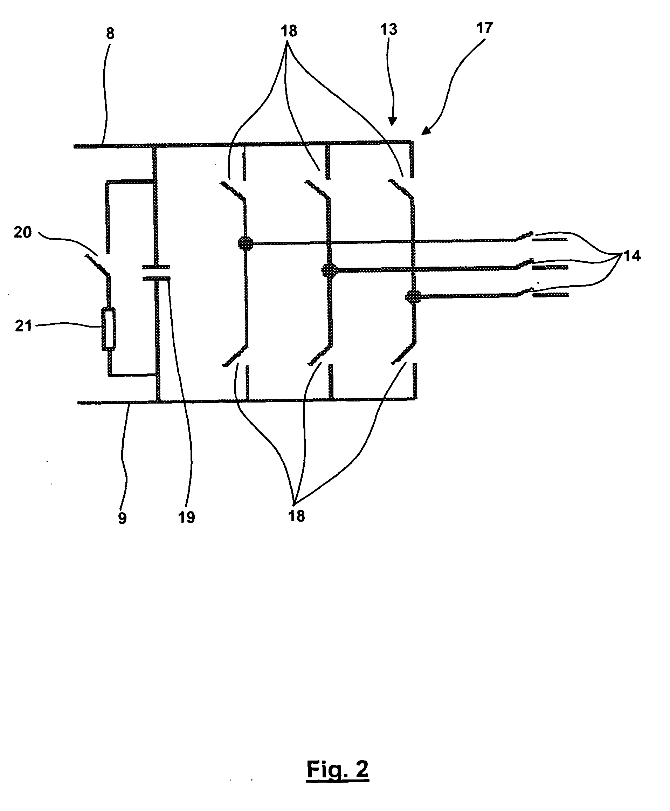

**Fig. 2** skizziert einen Aufbau des Wechselrichters 13 und der Schütze 14 an seinem Ausgang. Der Wechselrichter 13 weist eine Wechselrichterbrücke 17 mit 6 Schaltern 18 auf, die von der Steuerung 11 gemäß Fig. 1 getaktet werden, um im Normalfall einen dreiphasigen Wechselstrom in das eingeschlossene Stromnetz einzuspeisen. Am Eingang des Wechselrichters 13 ist eine Pufferkapazität 19 zwischen den Busleitungen 8 und 9 vorgesehen. Der Wechselrichter 13 kann darüber hinaus hier nicht dargestellte Zwischenkreise aufweisen. Wenn die zwischen den Busleitungen 8 und 9 anstehende Systemspannung bis auf null reduziert werden muss, um einen Rückstrom durch einen der Strings 5 gemäß Fig. 1 zu stoppen, hängt die Steuerung 11 gemäß Fig. 1 die Photovoltaikanlage durch Öffnen der Schütze 14 von dem Stromnetz ab. Dann wird die Pufferkapazität 19 durch Schließen eines Schalters 20 über einen Entladungswiderstand 21 entladen. Anschließend werden alle Schalter 18 geschlossen, um die Busleitungen 8 und 9 kurzzuschließen. Die üblicherweise bei einem Wechselrichter 13 vorhandenen Schalter 18 sind für einen derartigen Kurzschluss ohne weiteres geeignet, da sie sowieso für die Leerlaufspannung an die Busleitung 8 und 9 angeschlossenen Strings und die maximal fließenden Ströme ausgelegt sein müssen.

### BEZUGSZEICHENLISTE

- 1: Photovoltaikanlage
- 2: Stromnetz
- 3: Wechselstromnetz
- 4: Solarmodul
- 5: String
- 6: Anschlusseinheit
- 7: Zentraleinheit
- 8: Busleitung
- 9: Busleitung
- 10: Stromsensor
- 11: Steuerung
- 12: Wandler
- 13: Wechselrichter
- 14: Schütz
- 15: Anschlussleitung
- 16: Leistungsschalter
- 17: Wechselrichterbrücke
- 18: Schalter
- 19: Pufferkapazität
- 20: Schalter
- 21: Entladungswiderstand
- 22: Sender

## Patentansprüche

1. Vorrichtung zur Einspeisung elektrischer Energie von einer Mehrzahl von Strings (5), die Jeweils mehrere in Reihe geschaltete Photovoltalkmodule (4) aufweisen, in ein Stromnetz (2), mit Busleitungen (8, 9), mit Anschlüssen für jeden String, um die Strings (5) parallel zueinander an die Busleitungen (8, 9) anzuschließen, mit einem Stromsensor (10) für jeden String (5), der zumindest erfasst, ob ein Rückstrom zu dem String (5) fließt, und mit einem Wandler (12) der eine Steuerung (11) umfasst und der die elektrische Energie von den Busleitungen (8, 9) In das Stromnetz (2) einspeist, wobei mit der Steuerung (11) das Wandlers (12) die Systemspannung einstellbar ist, die zwischen den Busleitungen (8, 9) abfällt, **dadurch gekennzeichnet, dass** jeder Stromsensor (10) an die Steuerung (11) des Wandlers (12) meldet, ob ein Rückstrom zu dem angeschlossenen String (5) fließt. und dass die Steuerung (11) des Wandlers (12) die zwischen den Busleitungen (8, 9) anstehende Systemspannung reduziert, um den Rückstrom zu stoppen, wobei nach der Reduzierung der Systemspannung zwischen den Busleitungen (8, 9) die anderen Strings (5) weiterhin elektrische Energie liefern, die von dem Wandler (12) in das Stromnetz (2) eingespeist wird, solange die reduzierte Systemspannung zwischen den Busleitungen (8, 9) für eine Einspeisung von elektrischer Energie in das Stromnetz (2) ausreichend ist.

2. Photovoltaikanlage (1) mit einer Vorrichtung nach Anspruch 1 und mit einer Mehrzahl von Strings (5), die jeweils mehrere, ausschließlich in Reihe geschaltete Photovoltaikmodule (4) ausweisen und die parallel zueinander an die Anschlüsse der Vorrichtung angeachlossen sind.

3. Vorrichtung nach Anspruch 1 oder Photovoltaikanlage (1) nach Anspruch 2, **dadurch gekennzeichnet, dass** die Steuerung (11) die zwischen den Busleitungen (8, 9) anstehende Systemspannung Innerhalb eines aktuellen MPP-Fensters reduziert.

4. Vorrichtung oder Photovoltaikanlage (1) nach Anspruch 3, **dadurch gekennzeichnet, dass** die Steuerung (11) die zwischen den Busleitungen (8, 9) anstehende Systemepannung, soweit sich der Rückstrom sonst nicht stoppen lasst, bis auf null reduziert.

5. Vorrichtung oder Photovokalkanlage (1) nach Anspruch 4, **dadurch gekennzeichnet, dass** die Steuerung (11) die zwischen den Busleitungen (8, 9) anstehende Systemspannung. soweit sich der Rückstrom sonst nicht stoppen lässt, kurzschließt.

6. Vorrichtung oder Photovoltalkanlage (1) nach Anspruch 5, **dadurch gekennzeichnet, dass** die Steuerung (11) den Wandler (12) von dem Stromnetz (2) abtrennt, eine Pufferkapazität (19) am Eingang des Wandlers (12) entlädt und die zwischen den Busleitungen (8, 9) anstehende Systemspannung über Schalter (18) einer Wechseirichterbrücke (17) des Wandlers (12) kurzschließt.

7. Vorrichtung oder Photovoltalkanlage (1) nach mindestens einem der vorhergehenden Ansprüche, **dadurch gekennzeichnet, dass** die Stromsensoren (10) In mehreren dezentral anzuordnenden Anschlusseinheiten (6) vorgesehen sind.

8. Vorrichtung oder Photovoltaikanlage (1) nach Anspruch 7, **dadurch gekennzeichnet, dass** an einer den Wandler (12) umfassenden Zentraleinheit (7) Anschlüsse für Anschlussleitungen (15) von den dezentral anzuordnenden Anschlusseinheiten (6) an die Busleitungen (8, 9) vorgesehen sind.

9. Vorrichtung oder Photovoltaikanlage (1) nach mindestens einem der vorhergehenden Ansprüche, **dadurch gekennzeichnet, dass** die Stromsensoren (10) den Rückstrom über Kommunikationsleitungen oder drahtlos an die Steuerung (11) melden.

10. Vorrichtung oder Photovoltaikanlage (1) nach mindestens einem der vorhergehenden Ansprüche, **dadurch gekennzeichnet, dass** die Stromsensoren (10) den Rückstrom melden, wenn er einen vorgegebenen Grenzwert überschreitet.

11. Vorrichtung oder Photovoltaikanlage (1) nach mindestens einem der vorhergehenden Ansprüche, **dadurch gekennzeichnet, dass** die Stromsensoren (10) die Größe der von den Strings (5) fließenden Ströme messen und an eine Überwachungseinrichtung übermitteln.

12. Vorrichtung oder Photovoltaikanlage (1) nach mindestens einem der vorhergehenden Ansprüche, **dadurch gekennzeichnet, dass** die Stromsensoren (10) die von den Strings (5) fließenden Ströme nach Betrag und Richtung messen.

13. Vorrichtung oder Photovoltaikanlage (1) nach mindestens einem der vorhergehenden Ansprüche, **dadurch gekennzeichnet, dass** keine Dioden für die einzelnen Strings (5) vorgesehen sind.

14. Vorrichtung oder Photovoltalkanlage (1) nach Anspruch 13, **dadurch gekennzeichnet, dass** keine Überstromsicherungen für die einzelnen Strings (5) vorgesehen sind.

15. Verwendung einer Vorrichtung nach mindestens einem der vorhergehenden Ansprüche 1 und 3 bis 14 zur Einspeisung elektrischer Energie von einer Mehrzahl von Strings (5), die jeweils mehrere In Reihe geschaltete Photovoltaikmodule (4) aufweisen, in ein Stromnetz (2).

## Claims

1. Apparatus for feeding electric energy from a plurality of strings (5), which each comprise a plurality of photovoltaic modules (4) connected in series, into a power grid (2), the apparatus comprising bus lines (8, 9), terminals for each string to connect the strings (5) in parallel to each other to the bus lines (8, 9), a current sensor (10) for each string (5), which at least determines whether a reverse current flows to the string (5), and a converter (12), which includes a controller (11), and which feeds the electric energy from the bus lines (8, 9) into the power grid (2), wherein the system voltage which drops between the bus lines (8, 9) is adjustable by means of the controller (11) of the converter (12), **characterized in that** each current sensor (10) reports to the controller (11) of the converter (12) whether a reverse current flows to the connected string (5) and that the controller (11) of the converter (12) reduces the system voltage present between the bus lines (8, 9) to stop the reverse current, wherein, after reduction of the system voltage between the bus lines (8, 9), the other strings (5) further supply electric energy which the converter (12) feeds into the power grid (2), as long as the reduced system voltage between the bus lines (8, 9) is sufficient for feeding electric energy into the power grid (2).

2. Photovoltaic system (1) comprising an apparatus according to claim 1 and a plurality of strings (5) which each comprise a plurality of photovoltaic modules (4) exclusively connected in series, bus lines (8, 9), and which are connected in parallel to the terminals of the apparatus.

3. Apparatus according to claim 1 or photovoltaic system (1) according to claim 2, **characterized in that** the controller (11) reduces the system voltage present between the bus lines (8, 9) within a present MPP window.

4. Apparatus or photovoltaic system (1) according to claim 3, **characterized in that** the controller (11) reduces the system voltage present between the bus lines (8, 9) down to zero so far as the reverse current can not be stopped otherwise.

5. Apparatus or photovoltaic system (1) according to claim 4, **characterized in that** the controller (11) shorts the system voltage present between the bus lines (8, 9) so far as the reverse current can not be stopped otherwise.

6. Apparatus or photovoltaic system (1) according to claim 5, **characterized in that** the controller (11) disconnects the converter (12) from the power grid (2), discharges a buffer capacitance (19) at the input side of the converter (12) and shorts the system voltage present between the bus lines (8, 9) via switches (18) of an inverter bridge (17) of the converter (12).

7. Apparatus or photovoltaic system (1) according to at least one of the preceding claims, **characterized in that** the current sensors (10) are provided in a plurality of connection units (6) to be arranged locally.

8. Apparatus or photovoltaic system (1) according to claim 7, **characterized in that**, in a central unit (7) including the converter (12), connection terminals to the bus lines (8, 9) are provided for connection lines (15) coming from the connection units (6) that are to be arranged locally.

9. Apparatus or photovoltaic system (1) according to at least one of the preceding claims, **characterized in that** the current sensors (10) report the reverse current via communication lines or wirelessly to the controller (11).

10. Apparatus or photovoltaic system (1) according to at least one of the preceding claims, **characterized in that** the current sensors (10) report the reverse current, if it exceeds a predetermined threshold value.

11. Apparatus or photovoltaic system (1) according to at least one of the preceding claims, **characterized in that** the current sensors (10) measure the strength of the currents flowing from the strings (5) and report it to a monitoring device.

12. Apparatus or photovoltaic system (1) according to at least one of the preceding claims, **characterized in that** the current sensors (10) measure the currents flowing from the strings (5) with regard to value and direction.

13. Apparatus or photovoltaic system (1) according to at least one of the preceding claims, **characterized in that** no diodes are provided for the individual strings (5).

14. Apparatus or photovoltaic system (1) according to claim 13, **characterized in that** no over-current fuses are provided for the individual strings (5).

15. Use of an apparatus according to at least one of the preceding claims 1 and 3 to 14 for feeding electric energy from a plurality of strings (5), which each comprise a plurality of photovoltaic modules (4) connected in series, into a power grid (2).

## Revendications

1. Dispositif pour l'amenée d'énergie électrique d'une pluralité de chaînes (5), qui comportent chacune plusieurs modules photovoltaïques (4) montés en série, à un réseau électrique (2), comportant des barres de distribution (8, 9), avec des raccords pour chaque chaîne pour raccorder les chaînes (5) aux barres de distribution (8, 9) parallèlement les unes aux autres, comportant un capteur de courant (10) pour chaque chaîne (5) qui détecte au moins si un flux de retour atteint la chaîne (5) et comportant un convertisseur (12) qui comprend une commande (11) et qui amène l'énergie électrique dans le réseau électrique (2) à partir des barres de distribution (8, 9), la tension système pouvant être réglée au moyen de la commande (11) du convertisseur (12), tension qui chute entre les barres de distribution (8, 9), **caractérisé en ce que** chaque capteur de courant (10) informe la commande (11) du convertisseur (12) du fait qu'il y ait ou pas un flux de retour qui atteigne la chaîne (5) raccordée et **en ce que** la commande (11) du convertisseur (12) réduit la tension système existant entre les barres de distribution (8, 9) pour stopper le flux de retour, les autres chaînes (5) continuant à fournir de l'énergie électrique après la réduction de la tension entre les barres de distribution (8, 9), énergie électrique qui est amenée dans le réseau électrique (2) par le convertisseur (12) tant que la tension système entre les barres de distribution (8, 9) est suffisante pour l'amenée d'énergie électrique dans le réseau électrique (2).

2. Installation photovoltaïque (1) comportant un dispositif selon la revendication 1 et une pluralité de chaînes (5) qui comportent chacune plusieurs modules photovoltaïques uniquement montés en série et qui sont raccordées, parallèlement les unes aux autres, aux raccords du dispositif.

3. Dispositif selon la revendication 1 ou installation photovoltaïque (1) selon la revendication 2, **caractérisé**(e) en ce que la commande (11) réduit la tension système existant entre les barres de distribution (8, 9) à l'intérieur d'une fenêtre MPP actuelle.

4. Dispositif ou installation photovoltaïque (1) selon la revendication 3, **caractérisé**(e) en ce que la commande (11) réduit à zéro la tension système existant entre les barres de distribution (8, 9) dans la mesure où le flux de retour ne peut pas être stoppé d'une autre manière.

5. Dispositif ou installation photovoltaïque (1) selon la revendication 4, **caractérisé**(e) en ce que la commande (11) court-circuite la tension système existant entre les barres de distribution (8, 9) dans la mesure où le flux de retour ne peut pas être stoppé d'une autre manière.

6. Dispositif ou installation photovoltaïque (1) selon la revendication 5, **caractérisé**(e) en ce que la commande (11) coupe le convertisseur (12) du réseau électrique (2), décharge une capacité tampon (19) à l'entrée du convertisseur (12) et court-circuite la tension système existant entre les barres de distribution (8, 9) par le biais des commutateurs (18) d'un pont d'onduleur (17) du convertisseur (12).

7. Dispositif ou installation photovoltaïque (1) selon au moins l'une quelconque des revendications précédentes, **caractérisé**(e) en ce qu'on a prévu les capteurs de courant (10) dans plusieurs unités de raccordement (6) à agencer de manière décentralisée.

8. Dispositif ou installation photovoltaïque (1) selon la revendication 7, **caractérisé**(e) en ce qu'on a prévu, sur une unité centrale (7) comportant le convertisseur (12), des raccords pour les conduites de raccordement (15), des unités de raccordement (8) à agencer de manière décentralisée aux barres de distribution (8, 9).

9. Dispositif ou installation photovoltaïque (1) selon au moins l'une quelconque des revendications précédentes, **caractérisé**(e) en ce que les capteurs de courant (10) donnent des informations à la commande (11) concernant le flux de retour par le biais des conduites de communication ou sans fil.

10. Dispositif ou installation photovoltaïque (1) selon au moins l'une quelconque des revendications précédentes, **caractérisé**(e) en ce que les capteurs de courant (10) signalent le flux de retour lorsqu'il dépasse une valeur limite prédéfinie.

11. Dispositif ou installation photovoltaïque (1) selon au moins l'une quelconque des revendications précédentes, **caractérisé**(e) en ce que les capteurs de courant (10) mesurent la grandeur des courants partant des chaînes (5) et la transmettent au dispositif de surveillance.

12. Dispositif ou installation photovoltaïque (1) selon au moins l'une quelconque des revendications précédentes, **caractérisé**(e) en ce que les capteurs de courant (10) mesurent les courants partant des chaînes (5) en fonction de leur valeur et de leur sens.

13. Dispositif ou installation photovoltaïque (1) selon au moins l'une quelconque des revendications précédentes, **caractérisé**(e) en ce qu'on a prévu aucune diode pour les différentes chaînes (5).

14. Dispositif ou installation photovoltaïque (1) selon la revendication 13, **caractérisé**(e) en ce qu'on a prévu aucun fusible de surintensité pour les différentes chaînes (5).

15. Utilisation d'un dispositif selon au moins l'une quelconque des revendications précédentes 1 et 3 à 14 pour l'amenée d'énergie électrique d'une multitude de chaînes (5) à un réseau électrique (2), chaînes comportant chacune plusieurs modules photovoltaïques (4) montés en série.
